# FASCICULE DE BREVET EUROPEEN

(11) **EP 1 416 507 B1**
(45) Date de publication et mention de la délivrance du brevet: **11.12.2013**
(21) Numéro de dépôt: 03356168.9
(22) Date de dépôt: 29.10.2003
(51) Int. Cl.: H01H 33/42, F16D 1/12

(54) **Disjoncteur comprenant un ensemble de commande et une chambre de coupure et son procédé d'assemblage**
Leistungsschalter mit Antriebseinrichtung und Schaltkammer und Montageverfahren dafür
Circuit breaker with a control unit and an interrupting chamber and method for assembling the same

(30) Priorité: 30.10.2002 FR 0213598
(43) Date de publication de la demande: 06.05.2004
(73) Titulaire: ALSTOM Technology Ltd, 5400 Baden (CH)
(72) Inventeur: Ledru, Roger, 38230 Tignieu (FR); Grieshaber, Wolfgang, 69006 Lyon (FR)
(74) Mandataire: Ahner, Philippe

(56) Documents cités:
- EP-A- 0 727 340
- FR-A- 598 412
- FR-A- 1 383 339

## Description

La présente invention concerne un disjoncteur comprenant un ensemble de commande et une chambre de coupure, un procédé d'assemblage de ce disjoncteur, ainsi qu'un organe auxiliaire permettant cet assemblage.

De façon classique, un tel disjoncteur comprend un ensemble de commande qui est associé à une chambre de coupure. Cette chambre renferme une paire de contacts d'arc, dont au moins un qui est déplaçable sous l'action de l'ensemble de commande. Ce contact mobile peut ainsi être déplacé entre deux positions distinctes, correspondant respectivement à l'ouverture et à la fermeture du disjoncteur.

L'ensemble de commande précité est apte à emmagasiner de l'énergie mécanique, notamment grâce à la présence de ressorts. Il est en outre pourvu d'un arbre de commande dentelé, pouvant être entraîné en rotation lors de la libération de l'énergie mécanique emmagasinée dans l'ensemble de commande.

La chambre de coupure est munie d'un autre arbre de commande dentelé, dont la rotation permet de déplacer le contact mobile entre les deux positions précitées. Il est enfin prévu un ensemble de synchronisation entre ces deux arbres de commande, qui est réalisé sous forme d'un parallélogramme déformable.

De façon plus précise, cet ensemble de synchronisation comprend tout d'abord deux leviers, dont chacun est pourvu d'une couronne apte à coopérer avec un arbre dentelé correspondant. Les extrémités en regard de ces leviers sont par ailleurs mutuellement reliées au moyen de biellettes, articulées sur ces leviers.

Lorsqu'il désire assembler le disjoncteur décrit ci-dessus, l'opérateur dispose d'un ensemble de commande, dont l'arbre dentelé se trouve dans une position donnée, ainsi que d'une chambre de coupure, dont l'arbre de commande se trouve également dans une position donnée. A partir de ces positions, il doit alors adapter l'ensemble de synchronisation, en particulier en faisant coopérer les deux couronnes avec les deux arbres dentelés ci-dessus.

Le document FR-A-2135715 décrit un autre disjoncteur selon le préambule de la revendication 1.

On conçoit aisément qu'une telle double adaptation peut se révéler particulièrement délicate. Cette difficulté est notamment due aux tolérances de fabrication des différents éléments du disjoncteur.

Dans cette situation, la seule solution économiquement viable consiste à modifier la position angulaire de l'arbre de la chambre de coupure, afin d'autoriser les coopérations entre les deux couronnes et les deux arbres.

Ce pivotement de l'arbre de la chambre de coupure, selon un angle pouvant atteindre plusieurs degrés, se traduit généralement par une modification inacceptable de la position du contact mobile.

Ceci étant précisé, l'invention se propose de réaliser un disjoncteur permettant de remédier aux inconvénients évoqués ci-dessus.

Elle vise plus particulièrement à réaliser un tel disjoncteur, dont l'ensemble de synchronisation permet la transmission d'un couple élevé.

Elle vise également à proposer un tel disjoncteur, dont l'ensemble de synchronisation peut être adapté sur les deux arbres de commande de ce disjoncteur, moyennant un faible déplacement angulaire de l'arbre de la chambre de coupure, en particulier inférieur à 0,2°.

L'invention vise enfin à proposer un tel disjoncteur, dont l'ensemble de synchronisation possède des jeux réduits, en service, tout en présentant une flexibilité satisfaisante, notamment en ce qui concerne son montage et son démontage.

A cet effet, elle a pour objet un disjoncteur selon la revendication 1.

Selon d'autres caractéristiques de l'invention
- le nombre d'éléments d'engrènement de ladite couronne dentelée et le nombre d'éléments d'engrènement de l'arbre de commande sont des nombres premiers entre eux ;
- la valeur absolue de la différence entre, d'une part, le nombre d'éléments d'engrènement de l'arbre de commande et, d'autre part, le nombre d'éléments d'engrènement de ladite couronne dentelée est égale à 1 ;
- le plus petit des nombres d'éléments d'engrènement de l'arbre de commande et d'éléments d'engrènement de la couronne dentelée est supérieur à douze, de préférence à vingt-six ;
- l'arbre de commande possède trente-six éléments d'engrènement, alors que la couronne dentée possède trente-cinq éléments d'engrènement ;
- l'organe de liaison est marqué d'un repère d'identification s'étendant radialement et/ou angulairement ;
- le repère d'identification s'étend entre un renfoncement intérieur et un élément d'engrènement extérieur, tous deux alignés, de l'organe de liaison ;
- le repère d'identification se trouve radialement en regard d'un autre repère, ménagé sur la couronne dentelée et/ou sur l'arbre de commande ;
- l'autre couronne dentelée possède le même nombre d'éléments d'engrènement que l'arbre de commande sur laquelle elle est montée, de manière à coopérer directement avec cet arbre de commande.

L'invention a également pour objet un procédé d'assemblage du disjoncteur tel que défini ci-dessus, caractérisé en ce qu'il comprend les étapes suivantes :
- on monte l'autre couronne dentelée sur son arbre;
- on dispose la périphérie intérieure de la couronne dentelée au voisinage de la périphérie extérieure de son arbre de commande, de sorte que ces périphéries respectivement intérieure et extérieure forment un espace intercalaire ; et
- on introduit l'organe de liaison dans cet espace intercalaire, de manière à le faire coopérer à la fois avec l'arbre de commande et avec la première couronne dentelée.

Selon d'autres caractéristiques de l'invention :
- avant d'introduire l'organe de liaison dans l'espace intercalaire :
- on utilise un organe auxiliaire creux, possédant des éléments d'engrènement intérieurs identiques aux éléments d'engrènement intérieurs de l'organe de liaison, cet organe auxiliaire possédant une périphérie extérieure telle qu'il peut être introduit dans l'espace intercalaire, sans interférer avec la couronne dentelée, cet organe auxiliaire étant pourvu de marques radiales, reparties régulièrement, qui sont prévues en un nombre identique à celui desdits éléments d'engrènement intérieurs de l'organe auxiliaire,
- on introduit cet organe auxiliaire dans l'espace intercalaire,
- on identifie l'une, dite optimale, desdites marques radiales correspondant à une position de libre introduction de l'organe de liaison dans l'espace intercalaire,
- on réalise, sur ladite couronne dentelée et/ou l'arbre, ledit autre repère correspondant à cette position de libre introduction,
- on enlève cet organe auxiliaire hors de l'espace intercalaire, et
- on introduit l'organe de liaison dans cet espace intercalaire, dans ladite position d'introduction optimale ;
- Lors de l'introduction de l'organe de liaison dans l'espace intercalaire, on aligne le repère d'identification de l'organe de liaison avec ledit autre repère de la couronne dentelée et/ou de l'arbre,
- Chaque marque radiale de l'organe auxiliaire s'étend à partir d'un renfoncement intérieur de cet organe auxiliaire, ménagé entre deux éléments d'engrènement adjacents.
- On identifie la marque radiale optimale, qui se trouve centrée de façon optimale par rapport à un renfoncement, en regard, de la couronne dentelée, et/ou par rapport à un élément d'engrènement, en regard, de l'arbre.

Selon d'autres caractéristiques de l'invention :
- chaque marque radiale s'étend à partir d'un renfoncement ménagé entre deux éléments d'engrènement intérieurs,
- l'organe auxiliaire possède une périphérie extérieure lisse, notamment cylindrique de section circulaire.

L'invention va être décrite ci-après, en référence aux dessins annexés, donnés uniquement à titre d'exemple non limitatif, dans lesquels :
- la figure 1 est une vue schématique, illustrant un disjoncteur conforme à l'invention ;
- la figure 2 est une vue de face, illustrant un organe de liaison, appartenant à l'ensemble de synchronisation dont est pourvu le disjoncteur de la figure 1 ;
- la figure 3 est une vue de face, analogue à la figure 2, illustrant un organe auxiliaire intervenant dans l'assemblage du disjoncteur de la figure 1 ;
- les figures 4A à 4C sont des vues de face, illustrant différentes étapes du montage du disjoncteur de la figure 1 ; et
- la figure 5 est une vue de face, à plus grande échelle, illustrant une configuration différente du disjoncteur, lors de son montage.

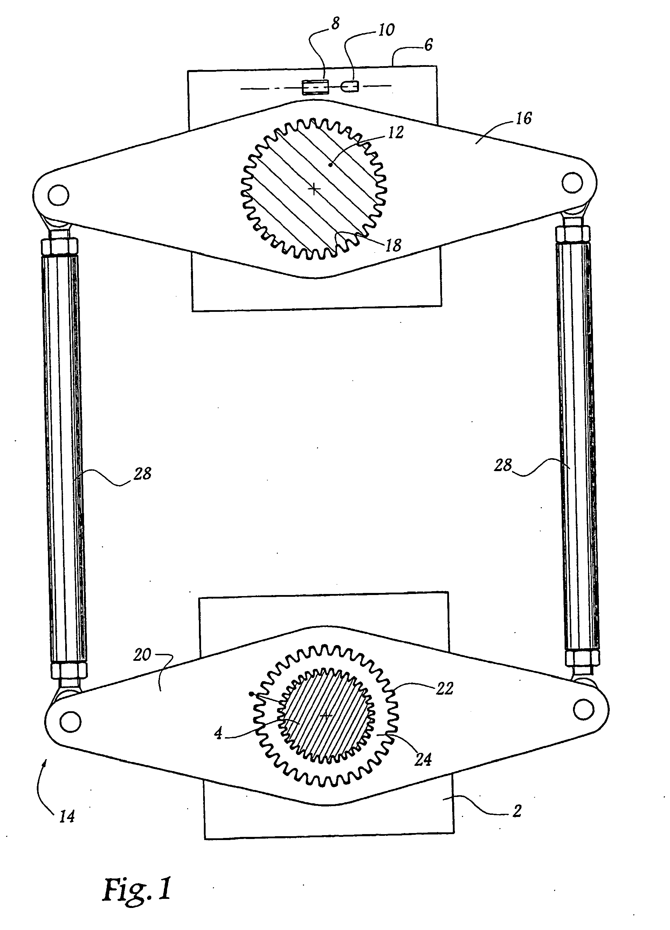

Le disjoncteur illustré à la figure 1 comprend un ensemble de commande, représenté de façon schématique sous forme d'un bloc 2. Cet ensemble de commande 2, qui est de façon connue apte à emmagasiner de l'énergie mécanique, notamment grâce à la présence de ressorts non représentés, est pourvu d'un arbre de commande dentelé 4.

Au sens de la présente invention, le terme dentelé signifie que l'organe mécanique considéré est muni d'éléments d'engrènement, qui peuvent notamment être des dents ou des cannelures. Dans ce qui suit, on supposera que les différents organes mécaniques sont munis de cannelures, formant ces éléments d'engrènement.

Le disjoncteur comprend également une chambre de coupure, qui est elle aussi représentée de façon schématique, sous forme d'un bloc 6. Cette chambre de coupure 6 possède, de façon classique, des contacts respectivement fixe 8 et mobile 10, tous deux illustrés de façon également schématique.

Il est en outre prévu un arbre de chambre de coupure dentelé 12, dont la rotation assure le déplacement du contact mobile 10. Ce dernier est ainsi apte à présenter deux positions extrêmes, correspondant respectivement à la fermeture et à l'ouverture du disjoncteur.

Les arbres 4 et 12 sont reliés l'un à l'autre par l'intermédiaire d'un ensemble de synchronisation, désigné dans son ensemble par la référence 14.

Cet ensemble 14 comprend tout d'abord un premier levier 16, dans lequel est ménagée une couronne dentelée centrale 18, destinée à coopérer de façon directe avec l'arbre 12. Ainsi, cet arbre 12 et cette couronne 18 possèdent le même nombre de cannelures.

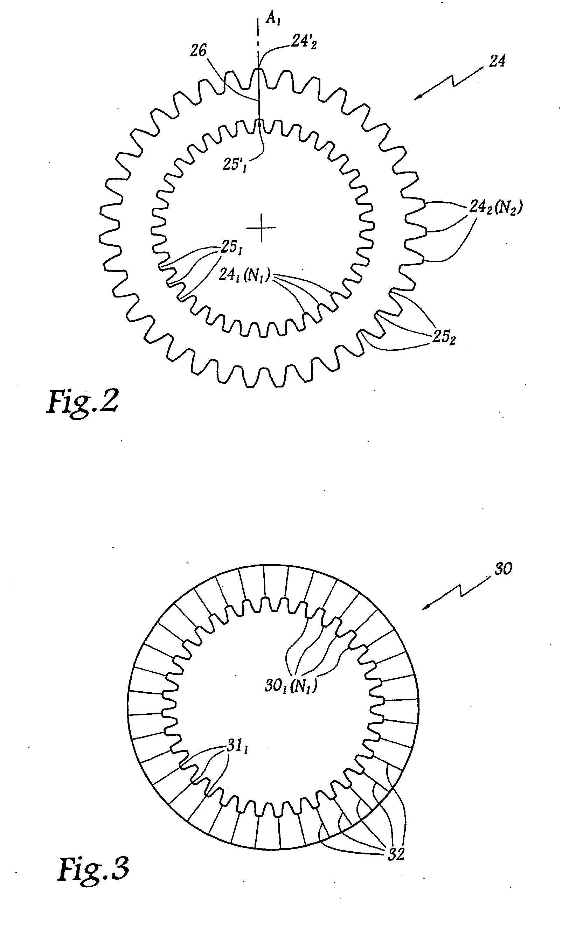

L'ensemble de synchronisation 14 comporte également un second levier 20, de même longueur que le premier levier 16, dans lequel est creusée une couronne dentelée centrale 22. Celle-ci coopère de façon indirecte avec l'arbre 4, en ce sens que leur engrènement mutuel est assuré par l'intermédiaire d'un organe de liaison, plus particulièrement visible sur la figure 2.

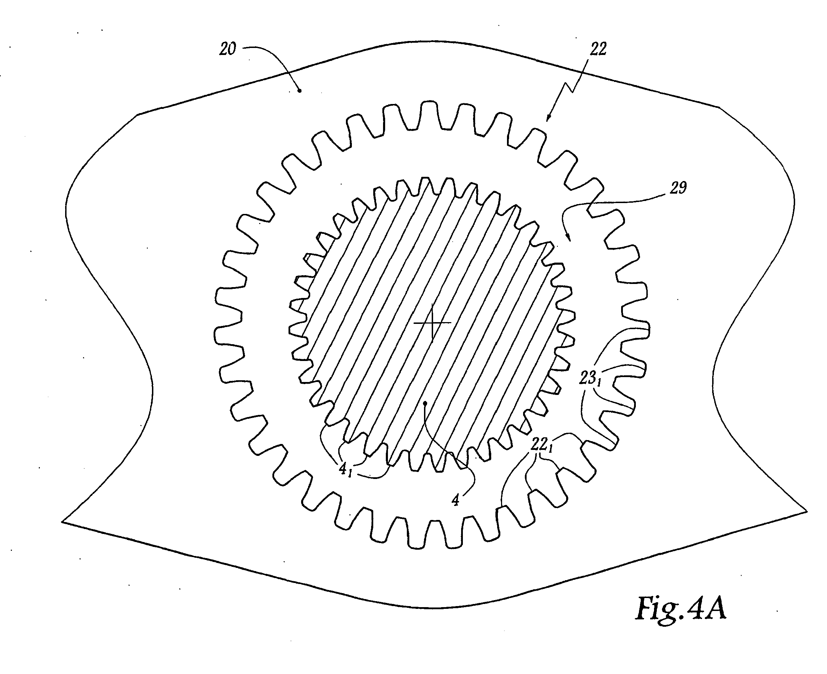

Cet organe de liaison 24, qui est creux, présente des cannelures internes 24₁ aptes à coopérer avec les cannelures externes 4₁ de l'arbre 4, ainsi que des cannelures externes 24₂ aptes à coopérer avec les cannelures internes 22₁ de la couronne 22. Ces cannelures 4₁ et 22₁ sont visibles sur la figure 4A.

On note 23₁ les renfoncements délimités par deux cannelures 22₁ adjacentes (figure 4A), 25₁ les renfoncements délimités par deux cannelures 24₁ adjacentes (figure 2), ainsi que 25₂ les renfoncements délimités par deux cannelures 24₂ adjacentes (figure 2).

On note par ailleurs N₁ le nombre de cannelures 4₁ et 24₁, présentes respectivement sur l'arbre 4 et à l'intérieur de l'organe de liaison 24, ainsi que N₂ le nombre de cannelures 24₂ et 22₁, prévues respectivement à l'extérieur de l'organe de liaison 24 et sur la couronne 22.

Il est à remarquer que N₁ et N₂ sont différents, qu'ils sont avantageusement des nombres premiers entre eux, en particulier que la valeur absolue de leur différence est égale à 1.

Dans l'exemple décrit et représenté, on supposera que N₁ est égal à 36, alors que N₂ est égal à 35.

Dans ce cas, puisque 35 et 36 sont des nombres premiers entre eux, il existe une unique paire, composée d'un renfoncement intérieur et d'une cannelure extérieure de l'organe de liaison, qui soit radialement alignée. On note 25'₁ ce renfoncement intérieur et 24'₂ cette cannelure extérieure, ainsi que A₁ leur axe commun (figure 2).

Il convient de noter qu'un repère visuel 26, réalisé par tout moyen approprié, s'étend le long de cet axe A. La fonction de ce repère 26, qui est ici un trait radial, sera explicitée dans ce qui suit.

Enfin, l'ensemble de synchronisation 14 comporte deux bielles 28 (figure 1), de même longueur, dont chacune relie deux extrémités en regard des leviers 16 et 20. Il est à remarquer que ces leviers 16 et 20 forment ainsi un parallélogramme déformable avec ces bielles 28.

Pour déclencher une manoeuvre d'ouverture ou de fermeture du disjoncteur, un signal de commande est envoyé, de façon connue en tant que telle, à l'ensemble de commande 2. Ce dernier libère alors l'énergie accumulée, de manière à faire entrer en rotation l'arbre de commande 4, qui est dit moteur.

Cet arbre moteur 4 entraîne alors, via l'ensemble de synchronisation 14, la rotation de l'arbre de chambre de coupure 12, dit suiveur. Ce dernier initie alors le déplacement du contact mobile 10 par rapport au contact fixe 8, de manière à placer le disjoncteur dans sa position souhaitée.

L'assemblage du disjoncteur décrit ci-dessus va maintenant être explicité.

Au moment où il doit procéder à cet assemblage, l'opérateur dispose, d'une part, d'un ensemble de commande 2, dont l'arbre moteur 4 se trouve dans une position angulaire donnée et, d'autre part, d'une chambre de coupure 6 dont l'arbre suiveur 12 se trouve également dans une position angulaire donnée. Il s'agit alors d'adapter l'ensemble de synchronisation 14, à la fois par rapport à l'ensemble de commande et à la chambre de coupure.

Il convient tout d'abord de noter que, en l'absence de l'organe de liaison 24, une telle adaptation serait particulièrement délicate. Ainsi, dans cette hypothèse, il y aurait lieu d'adapter directement les couronnes 18 et 22 sur les arbres correspondants 12 et 4.

On conçoit alors que, dans certaines positions prédéterminées de l'ensemble de commande et de la chambre de coupure, les cannelures de l'un des arbres de commande 4 ou 12 peuvent ne pas se trouver en regard des renfoncements de la couronne dentelée correspondante 22 ou 18, ce qui empêche leur coopération mutuelle. La seule solution économiquement viable consiste alors à faire pivoter l'arbre suiveur 12, selon un angle conséquent pouvant atteindre 5°, soit 180°/N₁, ce qui modifie la position du contact mobile 10 de façon inacceptable.

Conformément à l'invention, il s'agit tout d'abord d'adapter la couronne 18 du levier 16 sur l'arbre suiveur 12, ce qui ne pose pas de difficulté particulière. Puis, on place la couronne 22 du levier 20 autour de l'arbre moteur 4, ce qui ne pose pas non plus de difficulté particulière, étant donné que cette couronne 22 et cet arbre 4 ne sont pas destinés à coopérer directement.

A ce stade du montage, les faces en regard de cet arbre 4 et de cette couronne 22 délimitent un espace intercalaire 29, visible sur la figure 4A, au sein duquel il s'agit de loger l'organe de liaison 24.

Il est à remarquer qu'il existe une certaine position angulaire de cet organe de liaison 24, lui permettant d'être inséré de façon optimale dans cet espace intercalaire 29. Cette orientation angulaire optimale correspond à une coopération entre, d'une part, les cannelures 4₁ de l'arbre 4 et les cannelures intérieures 24₁ de l'organe 24 ainsi que, d'autre part, entre les cannelures 22₁ de la couronne 22 et les cannelures extérieures 24₂ de l'organe 24.

L'opérateur est à même de procéder pas à pas, en faisant pivoter l'organe de liaison 24, jusqu'à identifier cette orientation angulaire optimale. Cependant, une telle possibilité est désavantageuse, en ce sens qu'elle rallonge notablement l'opération d'assemblage.

Dans cette optique, il est avantageux que l'opérateur utilise un organe auxiliaire, représenté sur la figure 3.

Cet organe auxiliaire, qui est creux, est désigné dans son ensemble par la référence 30. Il est pourvu de cannelures intérieures 30₁, dont le nombre et le pas sont identiques à celles 24₁ de l'organe de liaison.

En revanche, sur sa périphérie extérieure, l'organe auxiliaire 30 est lisse, à savoir qu'il est dépourvu de cannelures. Son diamètre extérieur correspond sensiblement à celui de l'organe de liaison 24, pris à la base des cannelures extérieures 24₂.

Par ailleurs, des traits radiaux 32 sont pratiqués sur le corps de l'organe auxiliaire 30. Ces traits 32, dont le nombre N₁ correspond à celui des cannelures 30₁, passent par les milieux des différents creux 31₁, situés entre deux cannelures 30₁ adjacentes.

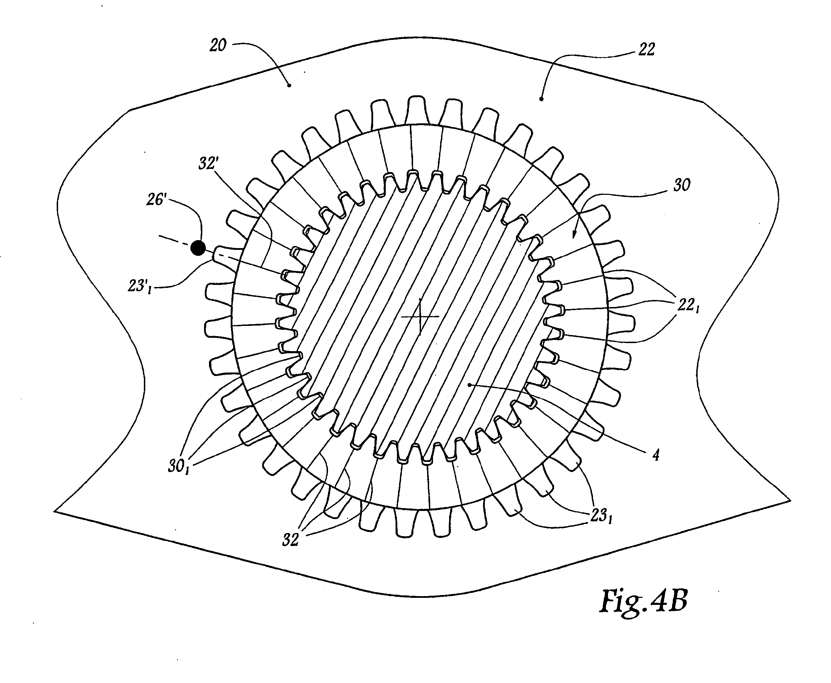

Il s'agit alors de disposer l'organe auxiliaire 30 sur l'arbre 4, comme illustré à la figure 4B. Cette opération ne nécessite aucune précaution particulière, en particulier en ce qui concerne l'orientation angulaire à donner à l'organe auxiliaire 30. En effet, les cannelures intérieures 30₁ coopèrent aisément avec les -cannelures 4₁, présentes en même nombre, alors que la surface extérieure lisse de cet organe 30 n'interagit pas avec les cannelures 22₁ de la couronne 22.

Une fois l'organe auxiliaire mis en place, il s'agit d'identifier le trait 32' qui se trouve le mieux centré, à son extrémité radiale extérieure, par rapport à un renfoncement correspondant 23₁ de la couronne 22. Ce renfoncement dit optimal, affecté de la référence 23'₁, est identifié par l'intermédiaire d'un repère 26', ménagé par l'opérateur en regard sur la couronne.

Il s'agit alors de retirer l'organe auxiliaire 30, hors de l'espace intercalaire 29 défini par l'arbre 4 et la couronne 2.

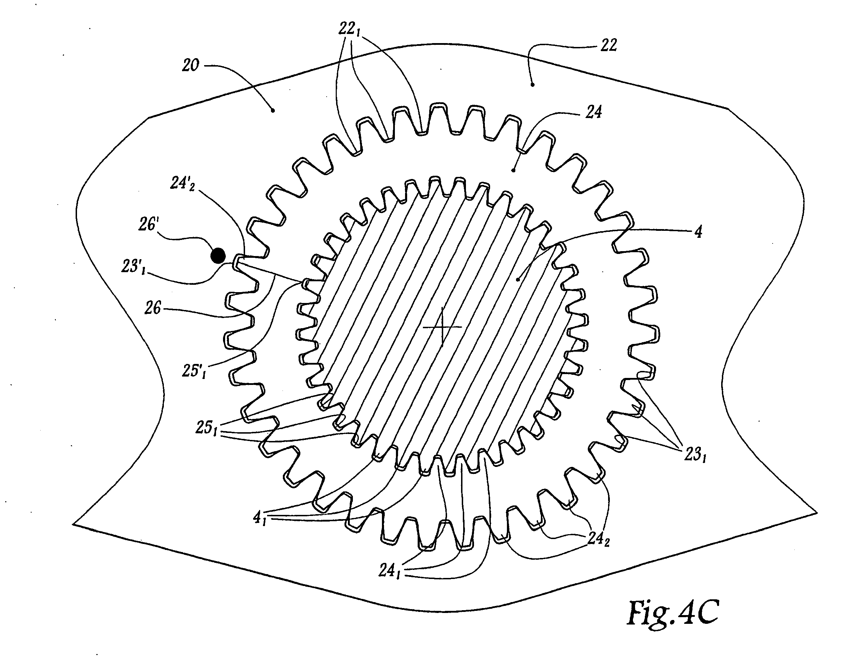

Puis, comme le montre la figure 4C, on dispose l'organe de liaison 24 dans cet espace intercalaire 29, en prenant soin de placer le repère 26, pratiqué sur cet organe 24, en regard du repère 26' réalisé sur la couronne 22.

Ceci permet d'optimiser la double coopération entre, d'une part, les cannelures 24₁ et 4₁ et, d'autre part, les cannelures 24₂ et 22₁.

Ainsi, les creux intérieurs 25₁ de l'organe de liaison coopèrent parfaitement avec les cannelures 41 de l'arbre moteur 4.

Par ailleurs, les cannelures extérieures 24₂ de cet organe de liaison sont centrées, de façon optimale, sur les creux 23₁ ménagés à la périphérie intérieure de la couronne 22. En effet, le repère 26 est confondu, sur la figure 4C, avec le trait 32' de la figure 4B, dont on a vu qu'il présentait un centrage optimal, par rapport au creux 23'₁.

Dans l'exemple décrit en référence aux figures 4A à 4C, il existe un trait 32' qui est parfaitement centré sur l'un 23'₁ des renfoncements de la couronne 22. Cependant, il est envisageable que ce trait « optimal » présente un certain décalage angulaire par rapport au renfoncement en regard, appartenant à la couronne dentelée.

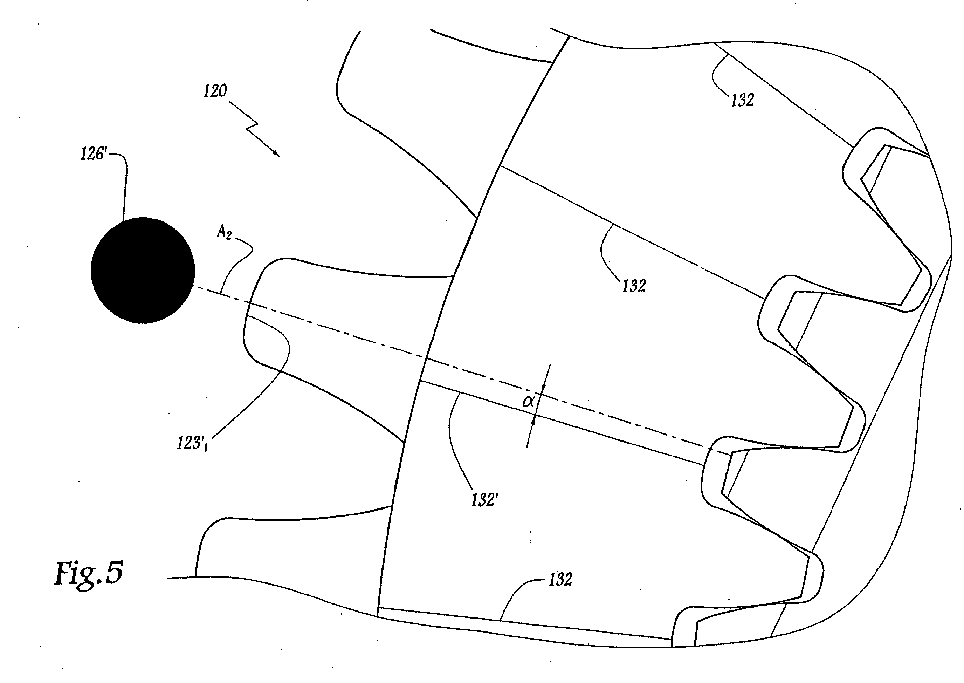

Une telle situation est illustrée dans la figure 5, sur laquelle les éléments mécaniques analogues à ceux décrits précédemment y sont affectés des mêmes numéros de référence augmentés de 100.

Sur cette figure 5, on constate que le trait « optimal » 132' présente un décalage angulaire, affecté de la référence α, par rapport à l'axe médian A₂ du renfoncement 123'₁.

On conçoit que, une fois ce renfoncement 123'₁ identifié, puis l'organe auxiliaire enlevé de l'espace intercalaire, l'introduction de l'organe de liaison ne pourra être réalisée en l'état, du fait de l'existence de ce décalage angulaire α. Il conviendra donc de faire pivoter, selon cet angle α, la couronne dentelée 120, moyennant un pivotement préalable de l'arbre de chambre de coupure 12.

A cet égard, la valeur maximale de cet angle α peut être déterminée à partir du nombre de cannelures N₁ et N₂. Ainsi, cette valeur maximale est égale, exprimée en degrés, à 180* ABS ((N₂ - N₁)/(N₁ * N₂)), où ABS correspond à la valeur absolue du nombre exprimé entre parenthèses.

Dans le cas évoqué précédemment, où N₁ est égal à 36, alors que N₂ est égal à 35, cet angle maximal α est égal à 0.14°. On conçoit donc qu'un tel pivotement de cet arbre de commande 12 n'est pas de nature à affecter la bonne marche de l'ensemble du disjoncteur, contrairement à ce qui prévalait dans l'art antérieur.

L'invention n'est pas limitée aux exemples décrits et représentés.

Ainsi, on peut prévoir que les différents traits 32, pratiqués sur l'organe auxiliaire 30, ne soient pas alignés avec l'axe médian de chaque renfoncement 31₁, mais par exemple avec l'axe médian de chaque cannelure 30₁. Dans cette optique, le repère 26 s'étend alors entre une cannelure intérieure et un renfoncement extérieur de l'organe de liaison.

De plus, on peut prévoir de réaliser sur l'arbre 4 un repère, analogue à celui 26' ou 126', en complément ou en remplacement de celui ménagé sur la couronne 22 du levier 20. A cet égard, chaque repère peut être pratiqué de manière autre que radialement, notamment de façon angulaire.

Par ailleurs, on peut prévoir d'utiliser l'organe de liaison 24, non pas au niveau du levier inférieur 20, mais au niveau du levier supérieur 16. Dans cette optique, cet organe de liaison est alors intercalé entre les faces en regard de l'arbre de commande 12 et de la couronne dentelée 18, alors que l'arbre 4 et la couronne dentelée 22 coopèrent de façon directe.

## Revendications

1. Disjoncteur comprenant un ensemble de commande (2) qui comporte un premier arbre de commande dentelé (4), ou arbre moteur, ce disjoncteur comprenant également une chambre de coupure (6) qui comporte au moins un contact d'arc mobile (10), ainsi qu'un second arbre de commande dentelé (12), ou arbre suiveur, apte à déplacer le contact mobile (10) entre des positions d'ouverture et de fermeture, ce disjoncteur comprenant enfin un ensemble de synchronisation de ces arbres respectivement moteur (4) et suiveur (12), qui comporte deux leviers (16, 20), dont chacun est pourvu d'une couronne dentelée (18, 22) apte à coopérer avec un arbre correspondant (12, 4), ainsi que deux bielles (28), dont chacune est articulée à ses deux extrémités sur lesdits leviers (16, 20),
**caractérisé en ce que** l'une (22) desdites couronnes dentelées possède un nombre (N₂) d'éléments d'engrènement (22₁) qui est différent du nombre (N₁) d'éléments d'engrènement (4₁) de l'arbre dentelé (4) avec lequel elle coopère, et **en ce qu'**un organe de liasion (24) est intercalé entre cette couronne et cet arbre, cet organe de liaison possédant des éléments d'engrènement intérieurs (24₁) dont le nombre (N₁) est identique à celui des éléments d'engrènement (4₁) de l'arbre moteur avec lesquels ils sont aptes à coopérer, ainsi que des éléments d'engrènement extérieurs (24₂) dont le nombre (N₂) est identique à celui des éléments d'engrènement (22₁) de ladite couronne dentelée avec lesquels ils sont aptes à coopérer.

2. Disjoncteur selon la revendication 1, **caractérisé en ce que** le nombre (N₂) d'éléments d'engrènement (22₁) de ladite couronne dentelée (22) et le nombre (N₁) d'éléments d'engrènement (4₁) de l'arbre de commande (4) sont des nombres premiers entre eux.

3. Disjoncteur selon la revendication 1 ou 2, **caractérisé en ce que** la valeur absolue de la différence entre, d'une part, le nombre (N1) d'éléments d'engrènement (41) de l'arbre de commande (4) et, d'autre part, le nombre (N2) d'éléments d'engrènement (221) de ladite couronne dentelée (2) est égale à 1.

4. Disjoncteur selon l'une quelconque des revendications précédentes, **caractérisé en ce que** le plus petit des nombres (N₁, N₂) d'éléments d'engrènement de l'arbre de commande (4) et d'éléments d'engrènement de la couronne dentelée (22) est supérieur à douze, de préférence à vingt-six.

5. Disjoncteur selon les revendications 2, 3 et 4, **caractérisé en ce que** l'arbre de commande (4) possède trente-six éléments d'engrènement (4₁), alors que la couronne dentée (22) possède trente-cinq élément d'engrènement (22₁).

6. Disjoncteur selon l'une quelconque des revendications précédentes, **caractérisé en ce que** l'organe de liaison (24) est marqué d'un repère d'identification (26) s'étendant radialement et/ou angulairement.

7. Disjoncteur selon la revendication 6, **caractérisé en ce que** le repère d'identification (26) s'étend entre un renfoncement intérieur (25'₁) et un élément d'engrènement extérieur (24'₂), tous deux alignés, de l'organe de liaison (24).

8. Disjoncteur selon la revendication 6 ou 7, **caractérisé en ce que** le repère d'identification (26) se trouve radialement en regard d'un autre repère (26'), ménagé sur la couronne dentelée (22) et/ou sur l'arbre de commande (4).

9. Disjoncteur selon l'une quelconque des revendications précédentes, **caractérisé en ce que** l'autre couronne dentelée (18) possède le même nombre d'éléments d'engrènement que l'arbre de commande (12) sur laquelle elle est montée, de manière à coopérer directement avec cet arbre de commande.

10. Procédé d'assemblage du disjoncteur conforme à l'une quelconque des revendications précédentes, **caractérisé en ce qu'**il comprend les étapes suivantes :
- on monte l'autre couronne dentelée (18) sur son arbre (12) ;
- on dispose la périphérie intérieure de la couronne dentelée (22) au voisinage de la périphérie extérieure de son arbre de commande (4), de sorte que ces périphéries respectivement intérieure et extérieure forment un espace intercalaire (29) ; et
- on introduit l'organe de liaison (24) dans cet espace intercalaire (29), de manière à le faire coopérer à la fois avec l'arbre de commande (4) et avec la première couronne dentelée (22).

11. Procédé d'assemblage selon la revendication 10, pour l'assemblage du disjoncteur selon la revendication 8 ou 9, **caractérisé en ce que**, avant d'introduire l'organe de liaison (24) dans l'espace intercalaire (29) :
- on utilise un organe auxiliaire (30) creux possédant des éléments d'engrènement intérieurs (30₁) identiques aux éléments d'engrènement intérieurs (24₁) de l'organe de liaison, cet organe auxiliaire (30) possédant une périphérie extérieure telle qu'il peut être introduit dans l'espace intercalaire (29), sans interférer avec la couronne dentelée (22), cet organe auxiliaire (30) étant pourvu de marques radiales (32), réparties régulièrement, qui sont prévues en un nombre identique à celui desdits éléments d'engrènement intérieurs (30₁) de l'organe auxiliaire,
- on introduit cet organe auxiliaire (30) dans l'espace intercalaire (29),
- on identifie l'une (32'), dite optimale, desdites marques radiales (32) correspondant à une position de libre introduction de l'organe de liaison (24) dans l'espace intercalaire (29),
- on réalise, sur ladite couronne dentelée (22) et/ou l'arbre (4), ledit autre repère (26') correspondant à cette position de libre introduction,
- on enlève cet organe auxiliaire (30) hors de l'espace intercalaire (29), et
- on introduit l'organe de liaison (24) dans cet espace intercalaire (29), dans ladite position d'introduction optimale.

12. Procédé d'assemblage selon la revendication 11, **caractérisé en ce que**, lors de l'introduction de l'organe de liaison (24) dans l'espace intercalaire (29), on aligne le repère d'identification (26) de l'organe de liaison (24) avec ledit autre repère (26') de la couronne dentelée (22) et/ou de l'arbre (4).

13. Procédé d'assemblage selon la revendication 11 ou 12, **caractérisé en ce que** chaque marque radiale (32) de l'organe auxiliaire (30) s'étend à partir d'un renforcement intérieur (31₁) de cet organe auxiliaire, ménagé entre deux éléments d'engrènement (30₁) adjacents.

14. Procédé d'asemblage selon la revendication 13, **caractérisé en ce qu'**on identifie la marque radiale optimale (32'), qui se trouve centrée de façon optimale par rapport à un renfoncement (23'₁), en regard, de la couronne dentelée (22), et/ou par rapport à un élément d'engrènement, en regard, de l'arbre (4).

## Patentansprüche

1. Leistungsschalter mit einer Steuereinheit (2), die eine erste gezahnte Steuerwelle (4) bzw. Antriebswelle aufweist, wobei dieser Leistungsschalter auch eine Trennkammer (6) umfasst, die zumindest einen beweglichen Lichtbogenkontakt (10) enthält, sowie eine zweite gezahnte Steuerwelle (12) bzw. Abtriebswelle, welche den beweglichen Kontakt (10) zwischen einer Offen- und einer Schließstellung verlagern kann, wobei dieser Leistungsschalter ferner eine Einrichtung zum Synchronisieren dieser Wellen, Antriebswelle (4) und Abtriebswelle (12), aufweist, die zwei Hebel (16, 20) enthält, von denen jeder mit einem Zahnkranz (18, 22) versehen ist, der mit einer entsprechenden Welle (12, 4) zusammenwirken kann, sowie zwei Stangen (28), von denen jede mit ihren beiden Enden an die Hebel (16, 20) angelenkt ist,
**dadurch gekennzeichnet, dass** einer (22) der Zahnkränze eine Anzahl (N₂) von Eingriffselementen (22₁) besitzt, die sich von der Anzahl (N₁) von Eingriffselementen (4₁) der Zahnwelle (4) unterscheidet, mit der er zusammenwirkt, und dass ein Verbindungsglied (24) zwischen diesem Kranz und dieser Welle eingesetzt ist, wobei dieses Verbindungsglied innere Eingriffselemente (24₁) besitzt, deren Anzahl (N₁) identisch zu derjenigen der Eingriffselemente (4₁) der Antriebswelle ist, mit denen sie zusammenwirken können, sowie äußere Eingriffselemente (24₂), deren Anzahl (N₂) identisch zu derjenigen der Eingriffselemente (22₁) des Zahnkranzes ist, mit denen sie zusammenwirken können.

2. Leistungsschalter nach Anspruch 1, **dadurch gekennzeichnet, dass** die Anzahl (N₂) von Eingriffselementen (22₁) des Zahnkranzes (22) und die Anzahl (N₁) von Eingriffselementen (4₁) der Steuerwelle (4) Primzahlen sind.

3. Leistungsschalter nach Anspruch 1 oder 2, **dadurch gekennzeichnet, dass** der absolute Wert der Differenz zwischen der Anzahl (N1) von Eingriffselementen (41) der Steuerwelle (4) einerseits und der Anzahl (N2) von Eingriffselementen (221) des Zahnkranzes (2) andererseits gleich 1 ist.

4. Leistungsschalter nach einem der vorangehenden Ansprüche, **dadurch gekennzeichnet, dass** die kleinere Anzahl (N₁, N₂) von Eingriffselementen der Steuerwelle (4) und von Eingriffselementen des Zahnkranzes (22) größer als zwölf, vorzugsweise größer als sechsundzwanzig, ist.

5. Leistungsschalter nach den Ansprüchen 2, 3 und 4, **dadurch gekennzeichnet, dass** die Steuerwelle (4) sechsunddreißig Eingriffselemente (4₁) besitzt, während der Zahnkranz (22) fünfunddreißig Eingriffselemente (22₁) besitzt.

6. Leistungsschalter nach einem der vorangehenden Ansprüche, **dadurch gekennzeichnet, dass** das Verbindungsglied (24) mit einer Identifikationskennung (26) markiert ist, die sich radial und/oder winklig erstreckt.

7. Leistungsschalter nach Anspruch 6, **dadurch gekennzeichnet, dass** die Identifikationskennung (26) sich zwischen einer inneren Vertiefung (25'₁) und einem äußeren Eingriffselement (24'₂) des Verbindungsglieds (24) erstreckt, die beide miteinander fluchten.

8. Leistungsschalter nach Anspruch 6 oder 7, **dadurch gekennzeichnet, dass** die Identifikationskennung (26) einer weiteren Kennung (26') radial gegenüberliegt, die an dem Zahnkranz (22) und/oder an der Steuerwelle (4) ausgebildet ist.

9. Leistungsschalter nach einem der vorangehenden Ansprüche, **dadurch gekennzeichnet, dass** der andere Zahnkranz (18) die gleiche Anzahl von Eingriffselementen wie die Steuerwelle (12) besitzt, an welcher er gelagert ist, so dass er direkt mit dieser Steuerwelle zusammenwirken kann.

10. Verfahren zum Montieren des Leistungsschalters nach einem der vorangehenden Ansprüche, **dadurch gekennzeichnet, dass** es nachfolgende Schritte umfasst:
- Anbringen des weiteren Zahnkranzes (18) an seine Welle (12);
- Anordnen des Innenumfangs des Zahnkranzes (22) benachbart zum Außenumfang seiner Steuerwelle (4), so dass diese Umfänge, nämlich der innere und der äußere, einen Zwischenraum (29) bilden; und
- Einführen des Verbindungsglieds (24) in diesen Zwischenraum (29), so dass er zugleich mit der Steuerwelle (4) und mit dem ersten Zahnkranz (22) zusammenwirkt.

11. Montageverfahren nach Anspruch 10 zum Montieren des Leistungsschalters nach Anspruch 8 oder 9, **dadurch gekennzeichnet, dass** vor dem Einführen des Verbindungsglieds (24) in den Zwischenraum (29)
- ein hohl ausgeführtes Hilfsglied (30) verwendet wird, das innere Eingriffselemente (30₁) besitzt, die identisch zu den inneren Eingriffselementen (24₁) des Verbindungsglieds ausgeführt sind, wobei dieses Hilfsglied (30) einen solchen Außenumfang besitzt, dass es in den Zwischenraum (29) eingeführt werden kann, ohne dabei mit dem Zahnkranz (22) zu interferieren, wobei dieses Hilfsglied (30) mit radialen Markierungen (32) versehen ist, die gleichmäßig verteilt sind und in einer Anzahl vorgesehen sind, die identisch zu derjenigen der inneren Eingriffselemente (30₁) des Hilfsglieds ist,
- dieses Hilfsglied (30) in den Zwischenraum (29) eingeführt wird,
- eine (32') der radialen Markierungen (32), die sogenannte optimale Markierung, identifiziert wird, die einer Position der freien Einführung des Verbindungsglieds (24) in den Zwischenraum (29) entspricht,
- an dem Zahnkranz (22) und/oder an der Welle (4) die weitere Kennung (26') ausgeführt wird, die dieser Position der freien Einführung entspricht,
- dieses Hilfsglied (30) aus dem Zwischenraum (29) entfernt wird, und
- das Verbindungsglied (24) in diesen Zwischenraum (29) in die optimale Einführposition eingeführt wird.

12. Montageverfahren nach Anspruch 11, **dadurch gekennzeichnet, dass** beim Einführen des Verbindungsglieds (24) in den Zwischenraum (29) die Identifikationskennung (26) des Verbindungsglieds (24) mit der weiteren Kennung (26') des Zahnkranzes (22) und/oder der Welle (4) ausgerichtet wird.

13. Montageverfahren nach Anspruch 11 oder 12, **dadurch gekennzeichnet, dass** jede radiale Markierung (32) des Hilfsglieds (30) sich ausgehend von einer inneren Verstärkung (31₁) dieses Hilfsglieds erstreckt, die zwischen zwei aneinandergrenzenden Eingriffselementen (30₁) ausgeführt ist.

14. Montageverfahren nach Anspruch 13, **dadurch gekennzeichnet, dass** die optimale radiale Markierung (32') identifiziert wird, die bezüglich einer gegenüberliegenden Vertiefung (23'₁) des Zahnkranzes (22) und/oder bezüglich eines gegenüberliegenden Eingriffselements der Welle (4) optimal zentriert liegt.

## Claims

1. Circuit breaker comprising a control assembly (2) comprising a first serrated control shaft (4), or driving shaft, this circuit breaker also comprising a breaking chamber (6) comprising at least one mobile arc contact (10), and a second serrated control shaft (12), or driven shaft, suitable for moving the mobile contact (10) between opening and closing positions, this circuit breaker lastly comprising an assembly for synchronising these driving (4) and driven (12) shafts, respectively, comprising two levers (16, 20), each of which is provided with a serrated ring (18, 22) suitable for engaging with a corresponding shaft (12, 4), and two connecting rods (28), each of which is articulated at both ends thereof on said levers (16, 20),
**characterised in that** one (22) of said serrated rings has a number (N₂) of gear mesh elements (22₁) which is different to the number (N₁) of gear mesh elements (4₁) of the serrated shaft (4) with which it engages, and **in that** a linking member (24) is inserted between this ring and this shaft, this linking member having inner gear mesh elements (24₁), the number (N₁) of which is identical to that of the gear mesh elements (4₁) of the driving shaft (4) with which they are suitable for engaging, and outer gear mesh elements (24₂), the number (N₂) of which is identical to that of the gear mesh elements (22₁) of the serrated ring with which they are suitable for engaging.

2. Circuit breaker according to claim 1, **characterised in that** the number (N₂) of gear mesh elements (22₁) of said serrated ring (22) and the number (N₁) of gear mesh elements (4₁) of the control shaft (4) are prime numbers together.

3. Circuit breaker according to claim 1 or 2, **characterised in that** the absolute value of the differences between, on the one hand, the number (N₁) of gear mesh elements (4₁) of the control shaft (4), on the other hand, and the number (N₂) of gear mesh elements (22₁) of said serrated ring (2) is equal to 1.

4. Circuit breaker according to any of the above claims **characterised in that** the lesser of the numbers (N₁, N₂) of gear mesh elements of the control shaft (4) and gear mesh elements of the serrated ring (22) is greater than twelve, preferably than twenty-six.

5. Circuit breaker according to claims 2, 3 and 4, **characterised in that** the control shaft (4) has thirtysix gear mesh elements (4₁), whereas the serrated ring (22) has thirty-five gear mesh elements (22₁).

6. Circuit breaker according to any of the above claims, **characterised in that** a linking member (24) is marked with an identification mark (26) extending in a radial and/or angular direction.

7. Circuit breaker according to claim 6, **characterised in that** the identification mark (26) extends between an inner recess (25'₁) and an outer gear mesh element (24'₂), both aligned, of the linking member (24).

8. Circuit breaker according to claim 6 or 7, **characterised in that** the identification mark (26) is situated radially opposite a further mark (26'), provided on the serrated ring (22) and/or on the control shaft (4).

9. Circuit breaker according to any of the above claims, **characterised in that** the other serrated ring (18) has the same number of gear mesh elements as the control shaft (12) whereon it is mounted, so as to engage directly with this control shaft.

10. Method for assembling the circuit breaker according to any of the above claims, **characterised in that** it comprises the following steps:
- the other serrated ring (18) is mounted on the shaft (12) thereof;
- the inner periphery of the serrated ring (22) is arranged in the vicinity of the outer periphery of the control shaft (4) thereof, such that these inner and outer peripheries respectively form an interposed space (29); and
- the linking member (24) is inserted into this interposed space (29), such that the member engages both with the control shaft (4) and with the first serrated ring (22).

11. Assembly method according to claim 10, for assembling the circuit breaker according to claim 8 or 9, **characterised in that**, before inserting the linking member (24) into the interposed space (29):
- a hollow auxiliary member (30) having inner gear mesh elements (30₁) identical to the inner gear mesh members (24₁) of the linking member is used, this auxiliary member (30) having an outer periphery such that it can be inserted into the interposed space (29), without interfering with the serrated ring (22), this auxiliary member (30) being provided with evenly distributed radial marks (32), which are provided in an identical number to that of said inner gear mesh elements (30₁) of the auxiliary member (30₁),
- this auxiliary member (30) is inserted into the interposed space (29),
- one (32') of said radial marks (32), referred to as optimal, corresponding to a position for free insertion of the linking member 24) into the interposed space (29) is identified,
- on said serrated ring (22) and/or the shaft (4) said other mark (26') corresponding to this free insertion position is produced,
- this auxiliary member (30) is removed from the interposed space (29), and
- the linking member (24) is inserted into this interposed space (29), in said optimal insertion position.

12. Assembly method according to claim 11, **characterised in that**, when the linking member (24) is inserted into the interposed space (29), the identification mark (26) of the linking member (24) is aligned with said other mark (26') of the serrated ring (22) and/or the shaft (4).

13. Assembly method according to claim 11 or 12, **characterised in that** each radial mark (32) of the auxiliary member (30) extends from an inner reinforcement (31₁) of this auxiliary member, provided between two adjacent gear mesh elements (30₁).

14. Assembly method according to claim 13, **characterised in that** the optimal radial mark (32'), which is optimally centred in relation to an opposite recess (23'₁) of the serrated ring (22), and/or in relation to an opposite gear mesh element, is identified.
